# EUROPÄISCHE PATENTANMELDUNG

(11) **EP 3 219 378 A1**
(43) Veröffentlichungstag der Anmeldung: **20.09.2017**
(21) Anmeldenummer: 16160327.9
(22) Anmeldetag: 15.03.2016
(51) Int. Cl.: B01D 46/24, B01D 46/52

(54) **FILTERPATRONE ZUR REINIGUNG VON LUFT**

(71) Anmelder: Schuko Heinz Schulte-Südhoff GmbH & Co. KG, 88348 Bad Saulgau (DE)
(72) Erfinder: SCHULTE-SÜDHOFF, Andre, 49196 Bad Laer (DE)
(74) Vertreter: Otten, Roth, Dobler & Partner mbB Patentanwälte

(57) **Zusammenfassung**

Vorgeschlagen wird eine Filterpatrone (1) zur Reinigung von Luft (L) aus einer Bearbeitungs- und/oder Verarbeitungsmaschine, und zum Herausfiltern von Partikeln aus der Luft, wobei die Filterpatrone eine zylindrische Grundform aufweist und ein Faltenfilter (2) umfasst, bei dem das Filtermaterial den Mantel der zylindrischen Grundform bildet und wobei das Filtermaterial wenigstens eine erste (I) und eine zweite Falte (II) aufweist, die jeweils so angeordnet sind, dass deren jeweilige, von der Längsachse (A) nach außen weisende Kante parallel zur Längsachse der zylindrischen Grundform verläuft, wobei die Filterpatrone einen Leitungskanal (3) zur Leitung der gefilterten Luft im Bereich der Längsachse aufweist und dazu ausgebildet ist, dass der Mantel des Filtermaterials, gesehen von der Längsachse, von außen mit zu filternder Luft angeströmt und die gefilterte Luft nach Passieren des Filtermaterials in den Leitungskanal gelangt. Zur Verbesserung des Wartungsaufwandes ist die Kante der ersten Falte (I) radial weiter von der Längsachse beabstandet als die Kante der zweiten Falte (II).

## Beschreibung

Die Erfindung betrifft eine Filterpatrone zur Reinigung von Luft aus einer Bearbeitungs- bzw. Verarbeitungsmaschine, insbesondere aus dem Bearbeitungsbereich einer Werkzeugmaschine, sowie zum Herausfiltern von Partikeln, wie zum Beispiel von Staub, Spänen oder dergleichen aus der Luft nach dem Oberbegriff des Anspruchs 1. Ferner betrifft die Erfindung eine Absaugvorrichtung nach dem Oberbegriff des Anspruchs 5.

Aus dem Stand der Technik sind allgemein Filterpatronen zur Reinigung von Luft, die aus dem Bearbeitungsbereich einer Werkzeugmaschine stammt, bekannt. Bei der Bearbeitung von Werkstücken fallen in der Regel Späne oder Stäube an, mit denen die Luft im Bearbeitungsbereich angereichert wird. Diese Stäube und andere Partikel in der Luft sind meist ab einer gewissen Konzentration entflammbar und können folglich eine Explosionsgefahr darstellen. Darüber hinaus können diese Stäube gegebenenfalls gesundheitsschädlich wirken, je nachdem, aus welchen Stoffen sie bestehen. Aus diesem Grunde wird die Luft aus dem Bearbeitungsbereich in der Regel eingesaugt und gereinigt, wozu Filter eingesetzt werden, insbesondere Filterpatronen, die ausgewechselt und gegebenenfalls gereinigt werden können.

Aufgabe der Erfindung ist es, eine Absaugvorrichtung bzw. eine Filterpatrone bereitstellen zu können, die weniger Wartungsaufwand benötigt.

Die Aufgabe wird, ausgehend von einer Filterpatrone bzw. einer Absaugvorrichtung der eingangs genannten Art, durch die Merkmale des Anspruchs 1 bzw. durch die kennzeichnenden Merkmale des Anspruchs 5 gelöst.

Durch die in den Unteransprüchen genannten Maßnahmen sind vorteilhafte Ausführungen und Weiterbildungen der Erfindung möglich.

Die erfindungsgemäße Filterpatrone dient zur Reinigung von Luft aus einer Bearbeitungs- bzw. Verarbeitungsmaschine, welche beispielsweise aus dem Bearbeitungsbereich einer Werkzeugmaschine stammt. Die bei der Bearbeitung anfallenden Partikel wie zum Beispiel Staub oder Späne können mit dieser Vorrichtung aus der aus dem Bearbeitungsbereich stammenden Luft abgeschieden werden.

Die erfindungsgemäße Filterpatrone besitzt zunächst eine zylindrische Grundform, das heißt, sie ist in erster Linie in Form eines Zylinders ausgebildet. Der Mantel der zylindrischen Grundform wird durch das Filtermaterial selbst gebildet. Das Filter, welches das Filtermaterial aufweist, bildet bei der erfindungsgemäßen Filterpatrone jedoch keine glatte Mantelfläche aus, wie es streng genommen bei einem mathematischen Gebilde eines Zylinders der Fall ist, sondern es liegt in Form eines Faltenfilters vor. Lediglich die Grundform ist bei der erfindungsgemäßen Filterpatrone im Wesentlichen zylindrisch ausgebildet.

Bei der erfindungsgemäßen Filterpatrone weist das Filtermaterial wenigstens eine erste und eine zweite Falte auf, welche jeweils so angeordnet sind, dass deren jeweilige, von der Längsachse nach außen weisende Kante parallel zur Längsachse der zylindrischen Grundform verläuft. Die Längsachse ist so angeordnet, dass sie senkrecht und mittig die Grundflächen der zylindrischen Grundform, nicht jedoch die Mantelfläche durchstößt.

Im Bereich der Längsachse befindet sich ein Leitungskanal der Filterpatrone zur Leitung der gefilterten Luft. Die erfindungsgemäße Filterpatrone wird also, gesehen von der Längsachse aus, von außen mit zu filternder Luft angeströmt, passiert im Bereich des Mantels das Filtermaterial und gelangt somit nach innen und schließlich in den Bereich des Leitungskanals. Von dort aus wird in der Regel die gefilterte Luft abgesaugt bzw. weiter geleitet.

Die erfindungsgemäße Filterpatrone zeichnet sich dadurch aus, dass die Kante der ersten Falte radial weiter von der Längsachse beabstandet ist als die Kante der zweiten Falte. Durch diese Maßnahme liegen bei der erfindungsgemäßen Filterpatrone wenigstens zwei Falten vor, die unterschiedliche Größen besitzen bzw. unterschiedlich hoch ausgebildet sind. Dadurch wird erreicht, dass zumindest ein Teil derjenigen Falte, die radial weiter von der Längsachse beabstandet ist, nicht von der zweiten Falte abgedeckt ist.

Das Filter wird meistens zumindest teilweise radial, in der Praxis aber auch abweichend von einer vollständig radial verlaufenden Strömungsrichtung angeströmt. Bei vollständig radialer Strömung in Richtung der Längsachse müsste das Luftvolumen immer stärker komprimiert werden. Dies ist in der Regel nicht der Fall, sodass es zu Umleitungen der Luft oder zu Verwirbelungen kommt. Deshalb wird der Luftstrom eher auch noch tangentiale oder parallel zu einer Sekante verlaufende Strömungsrichtungen in Bezug zur Mantelfläche aufweisen. Aufgrund der unterschiedlichen Höhen der Falten werden die ersten, größeren Falten in der Regel zumindest teilweise angeströmt werden können. Ferner liegt zwischen zwei ersten, größeren Falten auch ein größerer Freiraum, sodass sich Partikel dort schlechter anlagern können. Gerade dann, wenn der Raum zwischen den Falten enger ausgebildet ist, kann im Allgemeinen bei einer hohen Partikeldichte in der Luft schneller eine Anlagerung und somit ein Zusetzen der Filter erfolgen. Die Filter müssen dann früher ausgetauscht oder gereinigt werden. Die erfindungsgemäße Filterpatrone ist daher in der Regel weniger wartungsanfällig.

Durch diese besondere Ausbildung der Falten bei der erfindungsgemäßen Filterpatrone wird aber auch ermöglicht, dass die Partikelabscheidung verbessert wird, weil unabhängiger vom tatsächlichen Anströmwinkel der zu reinigenden Luft und bei weniger Partikelansammlungen am Filter im Mittel mehr Fläche zur Verfügung steht, um Partikel abzuscheiden. Dementsprechend kann im Schnitt auch der Durchströmungswiderstand verringert werden, sodass in vorteilhafter Weise der Durchfluss der Luft erhöht werden kann. Somit wird also auch die Filter- und Abscheideleistung im Allgemeinen bei der erfindungsgemäßen Filterpatrone verbessert.

Besonders vorteilhaft ist es, bei einem Ausführungsbeispiel der Erfindung die Falten derart auszubilden, dass deren Beabstandungen von der Längsachse eine periodische Struktur bilden. Bei einer bevorzugten Weiterbildung sind die Falten jeweils abwechselnd wie die erste und zweite Falte beabstandet. Somit wechseln sich in diesem Fall hohe und niedrige Falten ab. Das Filter erhält dadurch im Verlauf seiner Mantelstruktur eine Regelmäßigkeit, sodass die Filtereigenschaften und der Durchströmungswiderstand über die gesamte Mantelfläche annähernd gleich bleiben. Die Mantelfläche des Filters wird dabei in der Regel vergleichsweise viele Falten aufweisen. Zwischen zwei gleich hohen Falten liegt entsprechend eine niedrigere Falte, sodass der Freiraum zwischen diesen beiden hohen Falten größer ist. Zwischen ersten Falten ist somit mehr Raum vorhanden, was dazu führt, dass, wie bereits dargestellt, weniger Partikel sich dort ansammeln können. Zudem wird bei von der radialen Richtung abweichender Strömungsrichtung in der Regel mehr Filterfläche unmittelbar angeboten.

Die zweiten Falten, die weniger hoch ausgebildet sind als die ersten, werden weiterhin zunächst von radial verlaufenden Luftströmungen bzw. von im Freiraum zwischen zwei größeren Falten angestauter Luft angeströmt. Die zweiten Falten besitzen somit zwar in der Regel eine geringere Fläche als die ersten Falten, übernehmen allerdings auch einen geringeren Teil der Luft zum Filtern. Auch hierdurch kann der Strömungswiderstand wiederum verringert werden.

Bei einer Ausführungsform der Erfindung kann insbesondere der radiale Abstand zwischen der von der Längsachse nach außen weisenden Kante der ersten Falte und der nächsten, entsprechend zur Längsachse nach innen weisenden Kante doppelt so groß sein wie der radiale Abstand zwischen der von der Längsachse nach außen weisenden Kante der zweiten Falte und der nächsten, entsprechend zur Längsachse nach innen weisenden Kante. Im Wesentlichen sind sodann die ersten Falten doppelt so hoch wie die zweiten Falten. Auf diese Weise kann im Allgemeinen ein gut ausgewogenes Verhältnis zwischen zwei Effekten geschaffen werden, die beide durch die unterschiedlich hohen Falten erreicht werden, nämlich zum einen die verringerte Anlagerung und zum anderen die Reduzierung der Filterfläche. Durch eine derartige Optimierung kann sodann ein Maximum an Filterleistung erreicht werden.

Ein wesentlicher Vorteil kann dadurch erreicht werden, dass gemäß der Erfindung die effektive Filterfläche erhöht werden kann. Grundsätzlich sinkt zwar die Filterfläche, wenn einige der Falten weniger hoch ausgebildet sind als dies prinzipiell möglich wäre, unter Berücksichtigung der Strömungsverhältnisse kann aber der Durchfluss und somit auch die effektive Filterfläche, insbesondere unter Berücksichtigung der Anlagerung von Partikeln im Außenbereich, vergrößert werden. In den Bereichen, in denen sich Partikel angelagert haben, und zwar in einer solchen Menge, dass sie das Filter zusetzen, ist keine wirksame Filterfläche mehr vorhanden, das heißt, in diesen Bereichen ist das Filter in der Regel wirkungslos.

Bei einer Weiterbildung der Erfindung weisen die zur Längsachse nach innen weisenden Kanten jeweils den gleichen radialen Abstand zur Längsachse auf. Durch diese Maßnahme kann in vorteilhafter Weise die Filterfläche wiederum vergrößert werden. Die nach innen weisenden Kanten der Falten liegen aufgrund der Geometrie der Zylinderform näher zusammen als die nach außen weisenden Kanten, weil sie auf einem kleineren Kreis um die Längsachse liegen. Nähert man sich der Längsachse auf zwei unterschiedlichen radial verlaufenden Bahnen, so nähern sich diese Bahnen immer mehr einander an. Der Platz wird daher immer geringer, je näher man sich den Innenkanten nähert. Der Effekt, die Innenkanten unterschiedlich weit von der Längsachse zu beabstanden, wird daher strömungstechnisch eher geringere Vorteile mit sich bringen.

Darüber hinaus zeichnet sich dementsprechend eine Absaugvorrichtung zur Absaugung von Luft aus einer Bearbeitungs- und/oder Verarbeitungsmaschine, insbesondere aus dem Bearbeitungsbereich einer Werkzeugmaschine dadurch aus, dass zur Filterung eine Filterpatrone gemäß der Erfindung bzw. einen der Ausführungsbeispiele und Weiterbildungen vorgesehen ist. Hierdurch können die bereits genannten Vorteile wirkungsvoll erzielt werden.

### Ausführungsbeispiel

Ein Ausführungsbeispiel der Erfindung ist den Zeichnungen dargestellt und wird nachstehend unter Angabe weiterer Einzelheiten und Vorteile näher erläutert. Im Einzelnen zeigen:
- Figur 1: eine schematische Darstellung einer Filterpatrone mit einem Faltenfilter, gemäß der Erfindung,
- Figur 2: einen Querschnitt durch einen Faltenfilter, sowie
- Figur 3: eine Halterungsvorrichtung mit der darin eingesetzten Filterpatrone aus Figur 1.

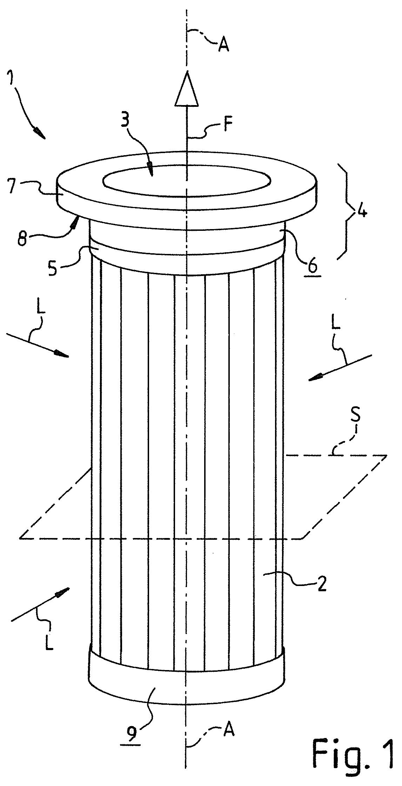

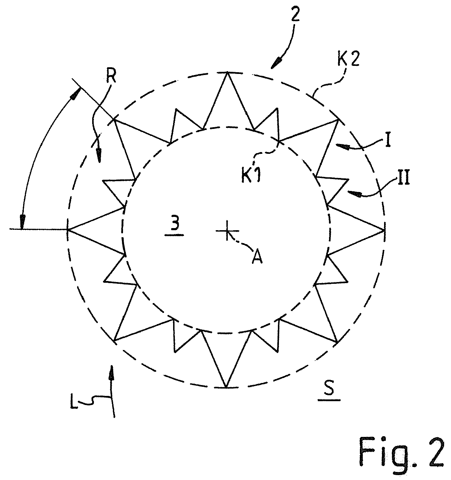

Figur 1 zeigt eine Filterpatrone 1 zur Reinigung von Luft aus dem Bearbeitungsbereich einer Werkzeugmaschine, mit der Staubund Spänepartikel herausgefiltert werden. Wie in Figur 1 zu sehen ist, weist die Filterpatrone 1 im Wesentlichen eine zylindrische Grundform auf. Die Filterpatrone 1 umfasst zudem ein Faltenfilter 2, das sich im Wesentlichen um den Mantel der zylindrischen Grundform herum erstreckt. Das Faltenfilter 2 ist mit Falten I, II ausgestattet, die sich parallel zur Längsachse A der zylindrischen Grundform erstrecken. Von den Falten des Faltenfilters 2 sind lediglich die Außenkanten als parallele Linien dargestellt. Zur genaueren Veranschaulichung der Faltenform ist eine ebene S eingezeichnet, durch die ein Schnitt durch den Faltenfilter 2 vorgenommen wird; diese entsprechende Schnittdarstellung ist in Figur 2 abgebildet. Das Faltenfilter 2 wird von außen, teilweise radial, von mit Partikeln angereicherter Luft L angeströmt. Die Strömungsrichtung der Luft L ist schematisch durch Pfeile dargestellt.

Die Luft durchdringt das Filtermaterial des Faltenfilters 2 und gelangt nach innen, wo sich im Bereich der Längsachse A ein Leitungskanal 3 befindet. Durch diesen Leitungskanal 3 strömt die gefilterte und von den Partikeln (im Wesentlichen) gereinigte Luft F nach oben in Richtung der Längsachse A. Am in Figur 1 oberen Ende der Filterpatrone 1 ist ein Abschlusselement 4 angeordnet, welches einen Abschnitt 5 aus einem harten Kunststoff, einen Rand 6 sowie einen radial nach außen weisenden Abschnitt 7 umfasst. Der Rand 6 ist im Wesentlichen aus einem flexiblen Material, nämlich einem flexiblen Kunststoff gefertigt, sodass bei der Entnahme des Filters dieser Rand zusammengedrückt werden kann. Das Material ist aber ausreichend elastisch und kann sich im unbelasteten Zustand wieder reversibel in den Ausgangszustand zurück versetzen. Der radial nach außen weisende Abschnitt 7 ist so ausgebildet, dass er eine Dichtwirkung entfalten kann und besitzt an seiner Unterseite 8 ein flexibles Material, sodass der radial nach außen weisende Rand auch zur Abdichtung verwendet werden kann, wenn die Filterpatrone mit dem Bereich 8 auf einer Halterungsöffnung aufliegt. Die Patrone 1 kann auf diese Weise einfach aus der Öffnung entnommen und auch einfach im Falle einer Wartung wieder eingesetzt werden. Der Abschnitt 9 am entgegengesetzten Ende der Filterpatrone zeigt einen aus einem festen Kunststoff ausgebildeten Endbereich 9, der ähnlich wie der Abschnitt 5 am anderen Ende dafür sorgt, dass das Filtermaterial 2 formstabil bleibt.

Figur 2 zeigt einen Schnitt durch das Faltenfilter 2 im Bereich der Ebene S (vgl. Figur 1). Der Betrachter blickt in Figur 2 direkt in Richtung der Längsachse A. Um den Mittelpunkt, das heißt den Durchstoßpunkt der Zeichenebene durch die Längsachse A, befinden sich zwei konzentrische Kreise, K1 und K2, wobei K2 einen größeren Durchmesser aufweist als K1. Die Falten I ersten Typs weisen die doppelte Höhe im Vergleich mit den Falten II auf. Die inneren Kanten der Falten I liegen auf dem Kreis K1, die äußeren Kanten auf dem Kreis K2. Bei den Falten II zweiten Typs liegen die inneren Kanten auf dem Kreis K1 und die äußeren Kanten auf der Hälfte des Abstands zwischen den Kreisen K1 und K2. Insgesamt ergibt sich aus Falten I ersten Typs und Falten II zweiten Typs eine periodische Struktur, abwechselnd mit großen Falten I und kleinen Falten II. Auf diese Weise entsteht zwischen benachbarten Falten gleichen Typs I ein größerer Raumbereich R, da auch winkelmäßig ein größerer Abstand zwischen beiden vorliegt.

Ein Luftstrom ungefilterter Luft, der nicht vollständig radial, sondern seitlich auf die Falten I bzw. II auftrifft, wie er in Figur 2 durch den Fall L dargestellt ist, trifft also im Wesentlichen auf einen nicht abgedeckten Bereich einer Falte I. Aufgrund des größeren Raumbereichs R können sich weniger Partikel in diesem Bereich ansammeln. Zudem kann die Durchflussgeschwindigkeit erhöht werden und die Abscheideeigenschaften des Filters 2 verbessert werden. Im Inneren des Filters befindet sich der Luftkanal 3.

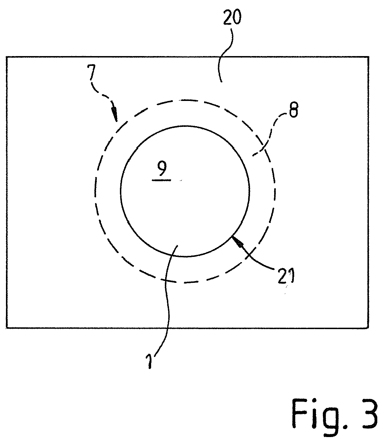

Figur 3 zeigt eine Halterungsvorrichtung 20, dargestellt von unten, mit einer eingesetzten, ebenfalls von unten dargestellten Filterpatrone 1, sodass auf den Endbereich 9 in Figur 3 geblickt wird. Die Filterpatrone 1 ist in der Halterungsöffnung 21 passgenau eingefügt und hängt in Schwerkraftrichtung nach unten, das heißt aus Zeichenebene von Figur 3 heraus. Gestrichelt dargestellt ist der radial nach außen weisende Abschnitt 7, der mit seiner Unterseite, der Auflagefläche 8, von oben, das heißt hinter der Zeichenebene von Figur 3 auf der Halterung 20 aufliegt.

### Bezugszeichenliste:

- 1: Filterpatrone
- 2: Faltenfilter
- 3: Leitungskanal im Inneren
- 4: Abschlusselement
- 5: fester, formstabiler Abschlussbereich
- 6: flexibler Rand
- 7: radial nach außen stehender Abschnitt
- 8: Auflagefläche
- 9: festes Endstück
- I: erste (größere) Falte
- II: zweite (kleinere) Falte
- A: Längsachse
- F: gefilterte Luft
- L: ungefilterte Luft
- F: Schnittebene
- K1: kleiner Radius
- K2: großer Radius
- R: freibleibender Raumbereich

## Patentansprüche

1. Filterpatrone (1) zur Reinigung von Luft (L) aus einer Bearbeitungs- und/oder Verarbeitungsmaschine, insbesondere aus dem Bearbeitungsbereich einer Werkzeugmaschine, und zum Herausfiltern von Partikeln, wie zum Beispiel von Staub, Spänen oder dergleichen, aus der Luft, wobei die Filterpatrone eine zylindrische Grundform aufweist und ein Faltenfilter (2) umfasst, bei dem das Filtermaterial den Mantel der zylindrischen Grundform bildet und wobei das Filtermaterial wenigstens eine erste (I) und eine zweite Falte (II) aufweist, die jeweils so angeordnet sind, dass deren jeweilige, von der Längsachse (A) nach außen weisende Kante parallel zur Längsachse der zylindrischen Grundform verläuft, wobei die Filterpatrone einen Leitungskanal (3) zur Leitung der gefilterten Luft im Bereich der Längsachse aufweist und dazu ausgebildet ist, dass der Mantel des Filtermaterials, gesehen von der Längsachse, von außen mit zu filternder Luft angeströmt und die gefilterte Luft nach Passieren des Filtermaterials in den Leitungskanal gelangt, **dadurch gekennzeichnet, dass** die Kante der ersten Falte (I) radial weiter von der Längsachse beabstandet ist als die Kante der zweiten Falte (II).

2. Filterpatrone (1) nach einem der vorgenannten Ansprüche, **dadurch gekennzeichnet, dass** die Falten (I, II) derart ausgebildet sind, dass deren Beabstandungen von der Längsachse eine periodische Struktur bilden, wobei insbesondere die Falten jeweils abwechselnd wie die erste und zweite Falte beabstandet sind.

3. Filterpatrone (1) nach einem der vorgenannten Ansprüche, **dadurch gekennzeichnet, dass** der radiale Abstand zwischen der von der Längsachse nach außen weisenden Kante der ersten Falte (I) und der nächsten, entsprechend zur Längsachse nach innen weisenden Kante doppelt so groß ist wie der radiale Abstand zwischen der von der Längsachse nach außen weisenden Kante der zweiten Falte (II) und der nächsten, entsprechend zur Längsachse nach innen weisenden Kante.

4. Filterpatrone (1) nach einem der vorgenannten Ansprüche, **dadurch gekennzeichnet, dass** die zur Längsachse nach innen weisenden Kanten jeweils den gleichen radialen Abstand zur Längsachse aufweisen.

5. Absaugvorrichtung zur Absaugung von Luft aus einer Bearbeitungs- und/oder Verarbeitungsmaschine, insbesondere aus dem Bearbeitungsbereich einer Werkzeugmaschine, und zur Reinigung der Luft durch Herausfiltern von Partikeln, wie zum Beispiel von Staub, Spänen oder dergleichen, aus der Luft, **dadurch gekennzeichnet, dass** zur Filterung eine Filterpatrone (1) nach einem der vorgenannten Ansprüche vorgesehen ist.

## Geänderte Patentansprüche

### Geänderte Patentansprüche gemäss Regel 137(2) EPÜ.

**1.** Verwendung einer Filterpatrone (1), wobei die Filterpatrone eine zylindrische Grundform aufweist und ein Faltenfilter (2) umfasst, bei dem das Filtermaterial den Mantel der zylindrischen Grundform bildet und wobei das Filtermaterial wenigstens eine erste (I) und eine zweite Falte (II) aufweist, die jeweils so angeordnet sind, dass deren jeweilige, von der Längsachse (A) nach außen weisende Kante parallel zur Längsachse der zylindrischen Grundform verläuft, wobei die Filterpatrone einen Leitungskanal (3) zur Leitung der gefilterten Luft im Bereich der Längsachse aufweist und dazu ausgebildet ist, dass der Mantel des Filtermaterials, gesehen von der Längsachse, von außen mit zu filternder Luft angeströmt und die gefilterte Luft nach Passieren des Filtermaterials in den Leitungskanal gelangt, **dadurch gekennzeichnet, dass** die Kante der ersten Falte (I) radial weiter von der Längsachse beabstandet ist als die Kante der zweiten Falte (II) zur Reinigung von Luft (L) aus einer Bearbeitungs- und/oder Verarbeitungsmaschine, insbesondere aus dem Bearbeitungsbereich einer Werkzeugmaschine, und zum Herausfiltern von Partikeln, wie zum Beispiel von Staub, Spänen oder dergleichen, aus der Luft.

**2.** Verwendung einer Filterpatrone (1) nach einem der vorgenannten Ansprüche, **dadurch gekennzeichnet, dass** die Falten (I, II) derart ausgebildet sind, dass deren Beabstandungen von der Längsachse eine periodische Struktur bilden, wobei insbesondere die Falten jeweils abwechselnd wie die erste und zweite Falte beabstandet sind.

**3.** Verwendung einer Filterpatrone (1) nach einem der vorgenannten Ansprüche, **dadurch gekennzeichnet, dass** der radiale Abstand zwischen der von der Längsachse nach außen weisenden Kante der ersten Falte (I) und der nächsten, entsprechend zur Längsachse nach innen weisenden Kante doppelt so groß ist wie der radiale Abstand zwischen der von der Längsachse nach außen weisenden Kante der zweiten Falte (II) und der nächsten, entsprechend zur Längsachse nach innen weisenden Kante.

**4.** Verwendung einer Filterpatrone (1) nach einem der vorgenannten Ansprüche, **dadurch gekennzeichnet, dass** die zur Längsachse nach innen weisenden Kanten jeweils den gleichen radialen Abstand zur Längsachse aufweisen.

**5.** Absaugvorrichtung zur Absaugung von Luft aus einer Bearbeitungs- und/oder Verarbeitungsmaschine, insbesondere aus dem Bearbeitungsbereich einer Werkzeugmaschine, und zur Reinigung der Luft durch Herausfiltern von Partikeln, wie zum Beispiel von Staub, Spänen oder dergleichen, aus der Luft, **dadurch gekennzeichnet, dass** zur Filterung eine Filterpatrone (1) zur Reinigung von Luft (L) aus einer Bearbeitungs- und/oder Verarbeitungsmaschine, insbesondere aus dem Bearbeitungsbereich einer Werkzeugmaschine, und zum Herausfiltern von Partikeln, wie zum Beispiel von Staub, Spänen oder dergleichen, aus der Luft vorgesehen ist, welche eine zylindrische Grundform aufweist und ein Faltenfilter (2) umfasst, bei dem das Filtermaterial den Mantel der zylindrischen Grundform bildet und wobei das Filtermaterial wenigstens eine erste (I) und eine zweite Falte (II) aufweist, die jeweils so angeordnet sind, dass deren jeweilige, von der Längsachse (A) nach außen weisende Kante parallel zur Längsachse der zylindrischen Grundform verläuft, wobei die Filterpatrone einen Leitungskanal (3) zur Leitung der gefilterten Luft im Bereich der Längsachse aufweist und dazu ausgebildet ist, dass der Mantel des Filtermaterials, gesehen von der Längsachse, von außen mit zu filternder Luft angeströmt und die gefilterte Luft nach Passieren des Filtermaterials in den Leitungskanal gelangt, wobei die Kante der ersten Falte (I) radial weiter von der Längsachse beabstandet ist als die Kante der zweiten Falte (II).

**1.** Verwendung einer Filterpatrone (1), wobei die Filterpatrone eine zylindrische Grundform aufweist und ein Faltenfilter (2) umfasst, ohne eine glatte Mantelfläche auszubilden, bei dem das Filtermaterial den Mantel der zylindrischen Grundform bildet und wobei das Filtermaterial wenigstens eine erste (I) und eine zweite Falte (II) aufweist, die jeweils so angeordnet sind, dass deren jeweilige, von der Längsachse (A) nach außen weisende Kante parallel zur Längsachse der zylindrischen Grundform verläuft, wobei die Filterpatrone einen Leitungskanal (3) zur Leitung der gefilterten Luft im Bereich der Längsachse aufweist und dazu ausgebildet ist, dass der Mantel des Filtermaterials, gesehen von der Längsachse, von außen mit zu filternder Luft angeströmt und die gefilterte Luft nach Passieren des Filtermaterials in den Leitungskanal gelangt, **dadurch gekennzeichnet, dass** die Kante der ersten Falte (I) radial weiter von der Längsachse beabstandet ist als die Kante der zweiten Falte (II) zur Reinigung von Luft (L) aus einer Bearbeitungs- und/oder Verarbeitungsmaschine, insbesondere aus dem Bearbeitungsbereich einer Werkzeugmaschine, und zum Herausfiltern von Partikeln, wie zum Beispiel von Staub, Spänen oder dergleichen, aus der Luft.

**2.** Verwendung einer Filterpatrone (1) nach einem der vorgenannten Ansprüche, **dadurch gekennzeichnet, dass** die Falten (I, II) derart ausgebildet sind, dass deren Beabstandungen von der Längsachse eine periodische Struktur bilden, wobei insbesondere die Falten jeweils abwechselnd wie die erste und zweite Falte beabstandet sind.

**3.** Verwendung einer Filterpatrone (1) nach einem der vorgenannten Ansprüche, **dadurch gekennzeichnet, dass** der radiale Abstand zwischen der von der Längsachse nach außen weisenden Kante der ersten Falte (I) und der nächsten, entsprechend zur Längsachse nach innen weisenden Kante doppelt Längsachse nach außen weisenden Kante der zweiten Falte (II) und der nächsten, entsprechend zur Längsachse nach innen weisenden Kante.

**4.** Verwendung einer Filterpatrone (1) nach einem der vorgenannten Ansprüche, **dadurch gekennzeichnet, dass** die zur Längsachse nach innen weisenden Kanten jeweils den gleichen radialen Abstand zur Längsachse aufweisen.

**5.** Absaugvorrichtung zur Absaugung von Luft aus einer Bearbeitungs- und/oder Verarbeitungsmaschine, insbesondere aus dem Bearbeitungsbereich einer Werkzeugmaschine, und zur Reinigung der Luft durch Herausfiltern von Partikeln, wie zum Beispiel von Staub, Spänen oder dergleichen, aus der Luft, **dadurch gekennzeichnet, dass** zur Filterung eine Filterpatrone (1) zur Reinigung von Luft (L) aus einer Bearbeitungs- und/oder Verarbeitungsmaschine, insbesondere aus dem Bearbeitungsbereich einer Werkzeugmaschine, und zum Herausfiltern von Partikeln, wie zum Beispiel von Staub, Spänen oder dergleichen, aus der Luft vorgesehen ist, welche eine zylindrische Grundform aufweist und ein Faltenfilter (2) umfasst, ohne eine glatte Mantelfläche auszubilden, bei dem das Filtermaterial den Mantel der zylindrischen Grundform bildet und wobei das Filtermaterial wenigstens eine erste (I) und eine zweite Falte (II) aufweist, die jeweils so angeordnet sind, dass deren jeweilige, von der Längsachse (A) nach außen weisende Kante parallel zur Längsachse der zylindrischen Grundform verläuft, wobei die Filterpatrone einen Leitungskanal (3) zur Leitung der gefilterten Luft im Bereich der Längsachse aufweist und dazu ausgebildet ist, dass der Mantel des Filtermaterials, gesehen von der Längsachse, von außen mit zu filternder Luft angeströmt und die gefilterte Luft nach Passieren des Filtermaterials in den Leitungskanal gelangt, wobei die Kante der ersten Falte (I) radial weiter von der Längsachse beabstandet ist als die Kante der zweiten Falte (II).
